# EUROPEAN PATENT APPLICATION

(11) **EP 2 184 255 A1**
(43) Date of publication of application: **12.05.2010**
(21) Application number: 09014036.9
(22) Date of filing: 10.11.2009
(51) Int. Cl.: B66F 9/075, B66F 9/10, B66F 9/12, B66F 17/00, B62D 53/02

(54) **Self propelled lift trucks**

(30) Priority: 10.11.2008 GB 0820505; 16.12.2008 GB 0822874
(71) Applicant: Brown, Frederick Leslie, Rous Lench Nr Evesham WR11 4UW (GB)
(72) Inventor: Brown, Frederick Leslie, Rous Lench Nr Evesham WR11 4UW (GB)
(74) Representative: Watts, Peter Graham

(57) **Abstract**

A self propelled lift truck has a traction unit with a pair of rear ground engaging wheels, one rear wheel being mounted on each side of the traction unit, at least one ground engaging drive wheel being mounted on to the traction unit, a lift mechanism being mounted to the traction unit for pivotal movement about a vertical axis, the lift mechanism having a pair of foot members extending forwardly of the lift mechanism in spaced apart relationship, a front ground engaging wheel being mounted on each of the foot members for rotation about a transverse horizontal axis adjacent the front end of the foot member, a steering mechanism being provided by which the lift mechanism may be pivoted relative to the traction unit in order to steer the lift truck and one or more stability wheels being mounted adjacent the rear of the lift mechanism, the or each stability wheel being mounted for rotation about a fixed transverse horizontal axis, the stability wheels being clear of the ground when the lift mechanism is in a straight ahead position and the lift truck is on flat ground, the centre of gravity of the lift truck being positioned inside the line joining the points of contact of the outside rear wheel and the or one of the stability wheels, whenever the lift mechanism is pivoted relative to the traction unit.

## Description

The present invention relates to self propelled lift trucks and in particular to pallet stackers and pallet trucks which may, for example, be used for moving and/or loading pallets onto and off lorries. The invention is particularly applicable to pedestrian controlled lift trucks but may also be applied to ride on lift trucks where the operator stands or sits on the lift truck.

Self propelled lift trucks typically comprise a traction unit with ground engaging wheels, at least one of the wheels being driven. Means, for example a tiller arm or steering wheel is provided by which the direction of movement of the traction unit may be controlled by an operator. With pedestrian controlled lift trucks, the direction of movement of the traction unit may be controlled manually by the controlling pedestrian applying force to the tiller arm, to one side or the other. Alternatively sensors on the tiller arm may detect movements thereof by the controlling pedestrian and in turn control the orientation of the or each drive wheel to control the direction of movement of the traction unit.

A lift mechanism is attached to the forward end on the traction unit, the lift mechanism having a pair of foot members which extend forwardly of the lift mechanism, one on either side of the lift mechanism. Wheels are provided adjacent the forward ends of the foot members, for supporting a load mounted on the lift mechanism.

Because of the requirement to position the wheels on the foot members as far forwards as possible, in order to support the load mounted on the lift mechanism and prevent the lift truck from toppling forwards, the manoeuvrability of the lift truck is somewhat compromised.

According to one aspect of the present invention, a self propelled lift truck comprises a traction unit having a pair of rear ground engaging wheels, one rear wheel being mounted on each side of the traction unit, at least one ground engaging drive wheel being mounted on the traction unit, **characterised in that** a lift mechanism is mounted mounted to the traction unit for pivotal movement about a vertical axis, the lift mechanism having a pair of foot members extending forwardly of the lift mechanism in spaced apart relationship, a front ground engaging wheel being mounted on each of the foot members for rotation about a transverse horizontal axis adjacent the front end of the foot member, a steering mechanism being provided by which the lift mechanism may be pivoted relative to the traction unit in order to steer the lift truck and one or more stability wheels being mounted adjacent the rear of the lift mechanism, the or each stability wheel being mounted for rotation about a fixed transverse horizontal axis, the stability wheels being clear of the ground when the lift mechanism is in a straight ahead position and the lift truck is on flat ground, the centre of gravity of the lift truck being positioned inside the line joining the points of contact of the outside rear wheel and the or one of the stability wheels, whenever the lift mechanism is pivoted relative to the traction unit.

Articulation of the traction unit and lift mechanism in the manner described above will significantly enhance the manoeuvrability of the self propelled lift truck. However because of the need to place the front wheels forwardly of the centre of gravity of the loaded lift truck, when the lift mechanism is turned relative to the traction unit, the centre of gravity of the lift truck will move outside the line joining the points of contact of the outside front and rear wheel, causing the lift truck to dip adjacent the pivot between the lift mechanism and the traction unit. Dipping of the lift truck in this manner will bring the stability wheel into engagement with the ground to support the weight of the lift truck and load mounted on the lift mechanism.

According to one embodiment of the invention, the foot members may be hinged so that they may pivot downwardly from a horizontal position, in order to remain in contact with the ground when the stability wheels engage undulations in the level of the ground.

According to a preferred embodiment of the invention a pair of rear wheels are mounted to the traction unit on a fixed transverse horizontal axis, one wheel being mounted on either side of the vehicle. A drive wheel is mounted on the same transverse horizontal axis as the rear wheels, centrally of the rear wheels. The drive wheel is resiliently loaded into engagement with the ground. Alternatively one or both of the rear wheels may be driven, differential means being provided when both rear wheels are driven.

The steering mechanism may comprise an electric motor mounted on the traction unit, the motor driving a gear which engages a steer pinion gear mounted on the lift mechanism. Alternatively the steering motor may be connected to the lift mechanism steer pinion by means of a chain drive. The drive motor is controlled by sensors attached to a steering wheel or tiller arm, which may be controlled by an operator to control the direction of movement of the lift truck. Means may also be provided for manually controlling the speed and direction of the drive motor, braking the lift truck and controlling the lift mechanism. While the present invention is primarily concerned with pedestrian guided lift trucks, a platform may be provided at the rear of the traction unit, upon which the operator may ride and from which the operator may control the lift truck as an alternative to walking behind the lift truck.

The lift mechanism may comprise a pair of forks which overlie the foot members with lift means to move the forks away from the foot members and, for example lift a pallet clear of the ground. According to an alternative embodiment, the lift mechanism comprises a lift mast with a pair of forks by which a pallet may, for example, be lifted for stacking of the pallets or loading the pallets onto or unloading the pallets from a vehicle.
The forks of the lift mechanism may be provided with a pantograph or other form of reach mechanism or support arm, by which the forks may be moved horizontally of the lift mechanism.

An embodiment of the invention is now described, by way of example only, with reference to the accompanying drawings, in which:-
Figure 1 is a diagrammatic illustration in side elevation, of a self propelled, pedestrian guided lift truck in accordance with the present invention;
Figure 2 is a diagrammatic illustration in plan view of the lift truck illustrated in figure 1, in the straight ahead position;
Figure 3 is a diagrammatic plan view of the lift truck illustrated in figure 1, with the lift mechanism turned to the right;
Figure 4 is a diagrammatic illustration in side elevation, of the lift truck shown in figure 1, on uneven ground; and
Figure 5 is a diagrammatic illustration, in side elevation showing a modification to the lift truck illustrated in figure 1.

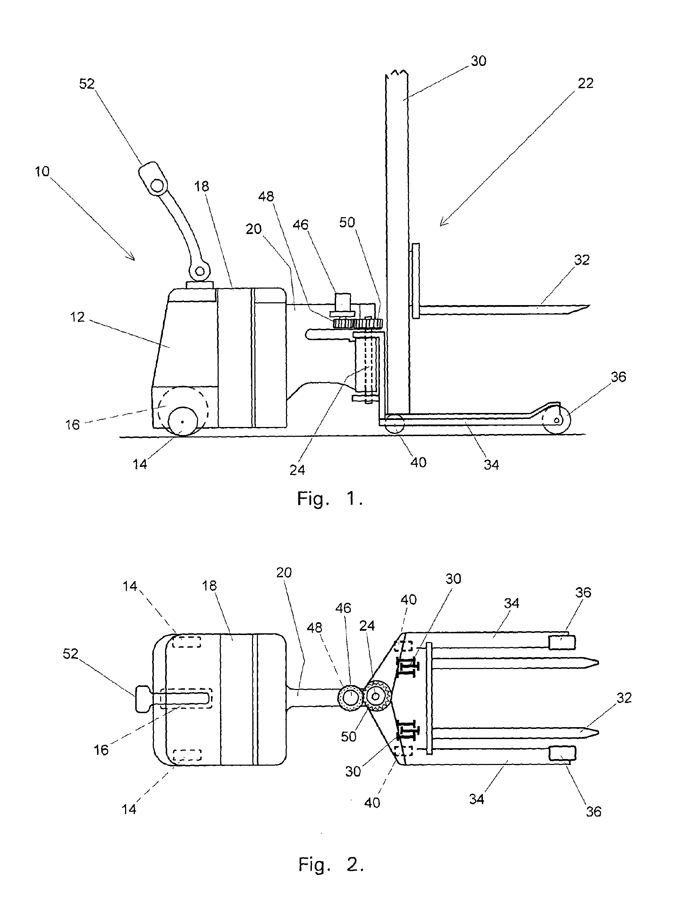

As illustrated in figures 1 and 2, a self propelled pedestrian guided pallet stacker 10 comprises a traction unit 12 having a pair of non-driven rear caster wheels 14 mounted on a fixed transverse horizontal axis, one wheel 14 on either side of the traction unit 12. The rear wheels 14 are non-compliantly mounted to the traction unit 12 and have solid rubber tires.

A single drive wheel 16 is mounted on a fixed transverse horizontal axis which is coaxial with the axis of the rear wheels 14, the drive wheel 16 being mounted centrally of the rear wheels 14. The drive wheel 16 is spring loaded downwardly into engagement with the ground and has a resilient pneumatic tire to ensure good traction.

The traction unit 12 has a drive motor (not shown) for driving the drive wheel 16 and a battery 18 for powering the drive motor.

An arm 20 extends forwardly and centrally of the front end of the traction unit 12. A lift mechanism 22 is mounted to the end of arm 20 remote from the tractor unit12. The lift mechanism 22 is mounted on a vertically extending pivot 24 secured to the end of arm 20, whereby the lift mechanism 22 is capable of pivoting at 90 degrees or more to either side, relative to the traction unit 12. The arm 20 extends forwardly from the front of the traction unit 12, sufficiently to provide clearance for the lift mechanism 22 when turned at 90 degrees.

The lift mechanism 22 comprises a lift mast 30 which may have a plurality of telescopic sections, with a pair of forks 32 mounted on the mast 30 with means for moving the forks 32 up and down the lift mast 30. A pair of foot members 34 extend from the lower end of the mast 30, one foot member 34 on either side of the lift mechanism 22. Front ground engaging wheels or rollers 36 are mounted on the front ends of each of the foot members 34. The front wheels or rollers 36 are mounted to the foot members 34 on fixed transverse horizontal axis. The foot members 34 extend sufficiently forwardly of the lift mast 30, so that the centre of gravity of a load mounted in the forks 32 will be located between the front and rear wheels 36, 14 of the lift truck 10.

A pair of stability wheels or rollers 40 are mounted towards the rear of the lift mechanism 22, one on either side of the lift mechanism 22 on fixed transverse horizontal axis. The stability wheels or rollers 40 are mounted at a height which will be clear of the ground by between 5 and 10mm, for example 8mm, when the lift mechanism 22 is in the straight ahead position and the lift truck 10 is on flat ground.

A steering motor 46 is mounted on the arm 20 adjacent to pivot 24, the steering motor 46 driving a drive gear 48 which in turn drives a steering pinion gear 50 mounted on the lift mechanism 22, whereby the lift mechanism 22 may be turned to either side relative to the traction unit, to steer the lift truck 10. The steering motor 46 is controlled by a tiller arm 52, sensors being provided to detect movement of the tiller arm 52 to one side or the other and to control the steering motor 46 to turn the lift mechanism 22 in the appropriate direction, that is movement of the tiller arm 52 to the left will turn the lift mechanism 22 to the right and movement of the tiller arm 52 to the right will turn the lift mechanism 22 to the left. The self propelled pedestrian guided lift truck 10 will consequently respond to movement of the tiller arm 52, in the same manner as a conventional self propelled pedestrian guided lift truck, although far less effort will be required to turn the lift truck 10, as this will be power assisted. Furthermore articulation of the lift truck 10 about the vertically extending pivot 24 will significantly enhance the manoeuvrability of the lift truck 10, enabling it to make tighter turns and manoeuvre in a smaller space.

According to a further embodiment of the invention, the or each drive wheel may be rotatable about a vertical axis whereby they may be steered to argument the steering effect of turning the lift mechanism. Steering of the drive wheel in this manner may be independent of or complementary to the steering effect of turning the lift mechanism. Independent steering means may be provided to control steering of the drive wheel. Furthermore while in the above embodiment rear wheels 14 are caster wheels, the wheels 14 may alternatively be mounted on fixed transverse axles.

Additional controls (not shown) are provided on the tiller arm 52 and/or the traction unit 12 to control:-
the direction and speed of the drive motor;
braking of the drive wheel 16;
movement of the forks 32 up and down the lift mast 30; and
extension or and retraction of the lift mast 30.

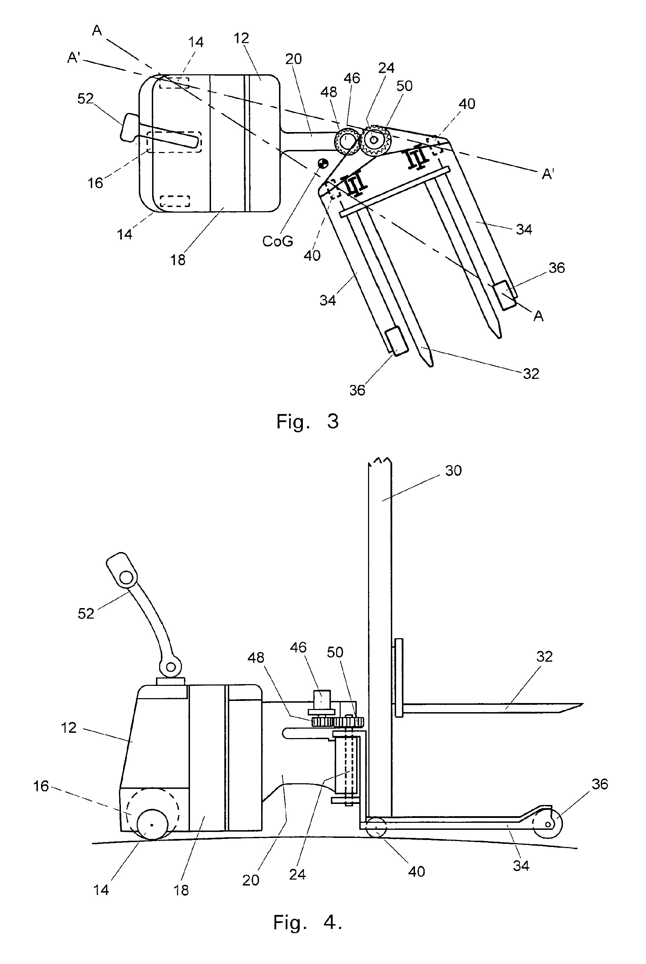

In operation, as illustrated in figure 3, as the lift mechanism 22 is turned relative to the traction unit 12, the centre of gravity (CoG) of the lift truck 10 and any load mounted on the forks 32 will move outside the line A-A joining the points of contact of the front and rear wheels 36,14 on the outside of the turn, so that the lift truck 10 will begin to topple over the line A-A, the front and/or rear wheels 36,14 on the inside of the turn lifting off the ground. As the lift truck 10 topples, the pivot 24 will dip, until the stability wheel 40, on the outside of the turn, comes into contact with the ground. The lift truck 10 will then proceed with the front wheel 36, stability wheel 40 and rear wheel 14 on the outside of the turn, in contact with the ground, to support the weight of the lift truck 10 and any load supported on the forks 32, the centre of gravity (CoG) being located inside the line A'-A' joining the points of contact of the rear wheels 36and stability wheel 40 on the outside of the turn. The load carried by the lift truck 10 is thus stably supported as the lift mechanism 22 articulates relatively the traction unit 12, to steer the lift truck 10.

As an alternative, instead of a pair of stability wheels 40 as described above, a single stability wheel may be mounted on a fixed transverse horizontal axis centrally of the lift mechanism 22, at or adjacent the axis of the pivot 24, so that, relative to the direction of turn of the lift truck 10, the single stability wheel will be located outside the centre of gravity (CoG) of the combined lift truck 10 and any load supported by the forks 32, when the lift mechanism 22 is turned in either direction.

As illustrated in figure 4, on undulating ground, the stability wheels 40 may make engagement with the ground, even when the lift mechanism 22 is in the straight ahead position, the front wheels 36 being lifted clear of the ground. If the lift mechanism 22 is turned in such circumstances, the stability wheels 40 will steer the lift truck 10, until the front wheels 36 come back into contact with the ground either as the ground contour changes or as a result of the shift in the centre of gravity (CoG) of the lift truck 10.

According to a further embodiment of the invention, the foot members 34 may be hinged to the lift mechanism 22 for pivotal movement downwardly from a horizontal position, so that the front wheels 36 will remain in contact with the ground, even when the lift truck 10 is travelling over an undulation.

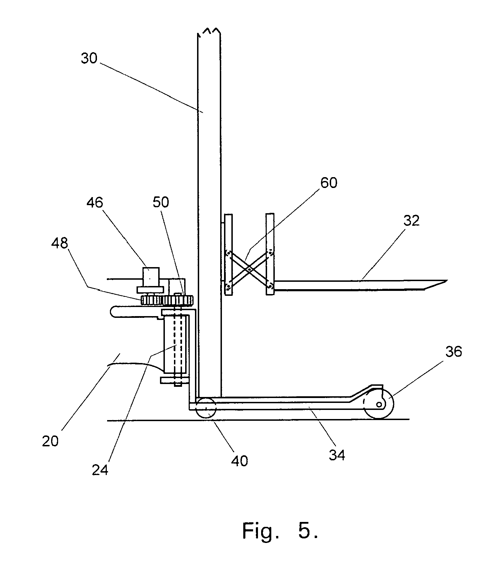

In the alternative embodiment illustrated in figure 5, the forks 32 are mounted to the lift mast 30 by a pantograph 60 or some similar reach mechanism or support arm, so that the forks 32 and any load mounted thereon may be moved horizontally relative to the lift mast 30. With this embodiment the foot members 34 must be of sufficient length and the front wheels 36 positioned sufficiently forwardly, in order to accommodate the shift in the centre of gravity (CoG) as the forks 32 and load mounted thereon are moved forwardly relative to the lift mast 30.

Various modifications may be made without departing from the invention. For example while in the pallet stacker described above a the forks 32 are mounted on a lift mast 30 so that a pallet or other load mounted on the forks 32 may be lifted to an appropriate height to be stacked, for example, one on top of another, on racking or onto lorries. The invention however applies to other forms of self propelled, pedestrian guided lift trucks, for example pallet trucks, where the forks 32 are mounted on the foot members 34, a lifting mechanism acting between the forks 32 and the foot members 34 to move the forks 32 from a lowered position, in which they may be positioned beneath a pallet resting on the ground, to a raised position in which the pallet is raised clear of the ground. The invention also applies to ride on lift trucks in which the operator stands or sits on the traction unit of the lift truck.

While in the above embodiment the drive wheel 16, steering motor 46 and lift mechanism 22 are powered electrically by battery 18 the power source may alternatively be in the form of an engine driven generator. Alternatively the various components may be driven hydraulically by pump means driven either electrically for example by a battery driven motor or directly by an engine.

## Claims

1. A self propelled lift truck (10) comprising a traction unit (12) having a pair of rear ground engaging wheels (14), one rear wheel (14) being mounted on each side of the traction unit (12), at least one ground engaging drive wheel (16) being mounted on to the traction unit (12), **characterised in that** a lift mechanism (22) is mounted to the traction unit (12) for pivotal movement about a vertical axis, the lift mechanism (22) having a pair of foot members (34) extending forwardly of the lift mechanism (22) in spaced apart relationship, a front ground engaging wheel (36) being mounted on each of the foot members (34) for rotation about a transverse horizontal axis adjacent the front end of the foot member (34), a steering mechanism being provided (46,48,50) by which the lift mechanism (22) may be pivoted relative to the traction unit (12) in order to steer the lift truck (10) and one or more stability wheels (40) being mounted adjacent the rear of the lift mechanism (22), the or each stability wheel (40) being mounted for rotation about a fixed transverse horizontal axis, the or each stability wheel (40) being clear of the ground when the lift mechanism (22) is in a straight ahead position and the lift truck (10) is on flat ground, the centre of gravity of the lift truck (10) being positioned inside the line joining the points of contact of the outside rear wheel (14) and the or one of the stability wheels (40), whenever the lift mechanism (22) is pivoted relative to the traction unit (14).

2. A lift truck (10) according to claim 1 **characterised in that** the or each stability wheel (40) has a clearance of 5 to 10mm with the ground, when the lift mechanism (22) is in the straight ahead position and the lift truck (10) is on flat ground.

3. A lift truck (10) according to claim 1 or 2 **characterised in that** a pair of stability wheels (40) are mounted on a fixed transverse horizontal axis towards the rear of the lift mechanism (22), one stability wheel adjacent each side of the lift mechanism (22).

4. A lift truck (10) according to claim 1 or 2 **characterised in that** a single stability wheel (40) is mounted centrally of the lift mechanism (22) at or adjacent the axis of the vertical pivot axis between the traction unit (12) and the lift mechanism (22).

5. A lift truck (10) according to any one of the preceding claims **characterised in that** a single drive wheel (16) is mounted centrally between a pair of rear wheels (14), the drive wheel (16) being resiliently loaded into engagement with the ground.

6. A lift truck (10) according to any one of the preceding claims **characterised in that** the or each drive wheel (16) is pivotal about a vertical axis, means being provide to steer the drive wheel (16).

7. A lift truck (10) according to claim 6 **characterised in that** the drive wheel is (16) steerable independently of the lift mechanism (22).

8. A lift truck (10) according to any one of the preceding claims **characterised in that** the foot members (34) are hinged to the lift mechanism (22) for pivotal movement downwardly from a horizontal position.

9. A lift truck (10) according to any one of the preceding claims **characterised in that** the lift mechanism (22) comprises a pair of forks (32) with means for moving the forks (32) from a lowered position to a raised position.

10. A lift truck according to claim 9 **characterised in that** the forks (32) are mounted for vertical movement on a lift mast (30).

11. A lift truck according to claim 9 or 10 **characterised in that** means (60) is provided for moving the forks (32) forward and backwards relative to the lift mechanism (22).
